# EUROPEAN PATENT SPECIFICATION

(11) **EP 3 308 996 B1**
(45) Date of publication and mention of the grant of the patent: **01.12.2021**
(21) Application number: 16306342.3
(22) Date of filing: 11.10.2016
(51) Int. Cl.: B60L 5/32

(54) **AN AUXILIARY CONVERTER FOR A RAILWAY VEHICLE**
HILFSUMRICHTER FÜR EIN SCHIENENFAHRZEUG
CONVERTISSEUR AUXILIAIRE POUR UN VÉHICULE FERROVIAIRE

(43) Date of publication of application: 18.04.2018
(73) Proprietor: ALSTOM Transport Technologies, 93400 Saint-Ouen (FR)
(72) Inventor: MASSELUS, Jean-Emmanuel, B-6032 Mont-Sur-Marchienne (BE); SCHRÖTER, Harald, 38154 Königslutter (DE)
(74) Representative: Lavoix

(56) References cited:
- EP-A2- 2 020 726
- DE-A1- 4 342 327
- DE-B3- 10 336 058

## Description

The present invention relates to an auxiliary converter with an integrated reversible battery charger.

In current train auxiliary supply architectures, electrical power is supplied from a three-phase auxiliary converter to a 3-phase load including a main compressor through a three-phase train line (typically 400 Vac). The three-phase auxiliary converter is fed directly or indirectly by the line (catenary or third rail) voltage. The auxiliary converter also generally includes a low voltage DC power supply (typically 110 Vdc) backed-up by a battery. Because this low voltage power supply is also generally charging the battery, this low voltage power supply is often called battery charger. In the case of trains equipped with a pneumatic pantograph, the main compressor is, for example, used to produce the compressed air necessary for lifting/lowering the pantograph. Therefore, when the pantograph is down and when there is no air in a main pipe of the train, a deadlock happens. That is, as the pantograph is down, no electrical power is supplied to the main compressor through the auxiliary converter. Accordingly, the main compressor is not able to provide air pressure to the main pipe to lift the pantograph without a backup solution. As the backup solution, for example, a manual pump is used for lifting the pantograph. However, installation of the manual pump adds costs. Furthermore, a manual pump is inconvenient for the driver. Another known backup solution is, for example, to use a dedicated small auxiliary compressor supplied by a battery. In this case, although the manual energy from the driver is unnecessary, there are still additional costs for the auxiliary compressor.

WO 2015/028532 A2 suggests addressing this problem by having a backup power supply for the main compressor. This backup power supply consists of a dedicated additional converter, which powers the main compressor from the vehicle battery such that the main compressor can turn at low speed for generating the compressed air necessary for lifting the pantograph. The drawback of this solution is the need for an additional converter.

The closest prior art FR 2 919 768 A1 (corresponding to document EP 2 020 726 A2) discloses a method of powering emergency ventilation fans for a railway vehicle. In this method, an auxiliary three-phase voltage is produced via an auxiliary converter having a reversible battery charger, from an energy stored in a rechargeable battery, in an emergency mode (=battery operating mode), and is supplied to the ventilation fans. The auxiliary converter is the same that is also used to power all the auxiliary loads of the railway vehicle such as the main compressor under normal operating conditions when the railway vehicle is connected to the catenary. Hence, this known solution does not need an additional converter to power the emergency ventilation fans from the battery.

The known reversible battery charger is of the topology "three phase active rectifier", and directly supplies the three-phase voltage (via a low frequency 50 Hz output transformer) to the emergency ventilation by functioning as an inverter in emergency mode. One might think of using this setup for powering the main compressor to lift the pantograph. However, with this topology, it is difficult to supply enough current from the reversible battery charger to start the main compressor without oversizing the battery charger. As the main compressor power is in the order of magnitude of the battery charger power (typical main compressor power is 15 kW, while typical battery charger power is 25 kW) and as the compressor starting transient current is several times higher than its steady state current (typically 7 times higher), and as the battery charger current is connected to the output 3-phase transformer, such that its current is proportional to the compressor current (neglecting the impact of the 3-phase output capacitor current), this known solution is not adapted for rapidly starting the main compressor. Indeed, the reversible battery charger is merely designed to supply the DC load and for battery charging and cannot cope with the high starting current demands of the main compressor.

Therefore, it is an object of the present invention to adapt the auxiliary converter of FR 2 919 768 A1 so that it is capable of adequately delivering the high starting current needed for powering the main compressor for lifting the pantograph in the battery operating mode.

Besides, document DE 43 42 327 A1 discloses a switched power supply having a single transformer including a pair of primary windings and a pair of secondary windings. The present invention is defined by the attached independent claim. Other preferred embodiments may be found in the dependent claims.

This object is achieved with an auxiliary converter for providing power to auxiliary loads of an auxiliary electrical network of a railway vehicle, the auxiliary loads including a main air compressor, the auxiliary converter comprising:
- a main inverter stage with a main inverter input and a main inverter output, the main inverter stage being configured for generating an AC voltage at its main inverter output from DC voltage received at its main inverter input from a live catenary;
- a transformer stage connected to the main inverter output and adapted to convert, in a catenary operating mode, the AC voltage from the main inverter stage, the transformer stage having a supply output for supplying a supply voltage to the auxiliary loads and a separate charging output for supplying a reversible battery charger; and
- the reversible battery charger being connected to said charging output and adapted to charge, in said catenary operating mode, an electrical battery of said railway vehicle,
wherein the reversible battery charger is adapted to, in a battery operating mode, deliver a supply voltage from the battery to said transformer stage for powering auxiliary loads, characterised by a high power rectifying and inverting stage connected to said supply output and for providing power to said auxiliary loads of said auxiliary electrical network, wherein said high power rectifying and inverting stage comprises in series from input to output a single phase rectifier, a set of buffer capacitors and a three phase inverter.

In the auxiliary converter according to the invention, the galvanic insulation is made by the transformer stage. In this auxiliary converter architecture, loads are always supplied by the inverter stage, even in the battery operating mode when a pantograph is down. In this latter case, the reversible battery charger supplies power to the high power rectifying and inverting stage via the transformer stage. It is the high power rectifying and inverting stage which in turn supplies sufficient power to the compressor for starting the same in the battery operating mode. As the rated power of the high power rectifying and inverting stage is much higher than the battery charger power (typical ratio: 5 to 8 times), this auxiliary converter architecture allows to start loads (like the main compressor) with higher transient apparent power without overdesign of the battery charger.

Drawings:
- Figure 1 is a block diagram indicating a functional configuration example of an auxiliary converter according to the invention for providing power to auxiliary loads of an auxiliary electrical network of a railway vehicle,
- Figure 2 is a circuit diagram of the auxiliary converter of Fig. 1.

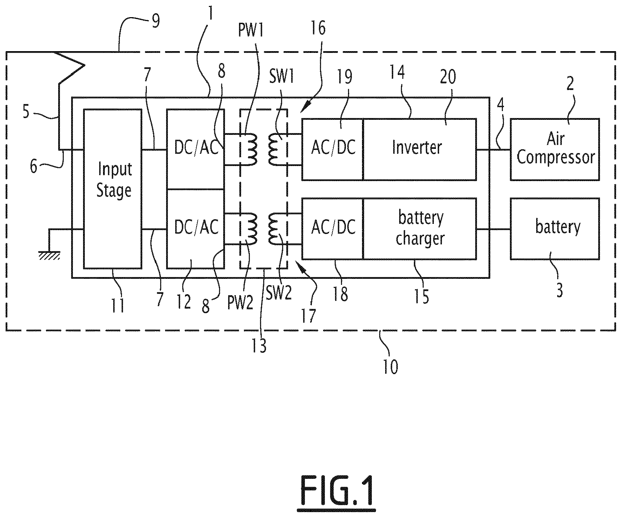

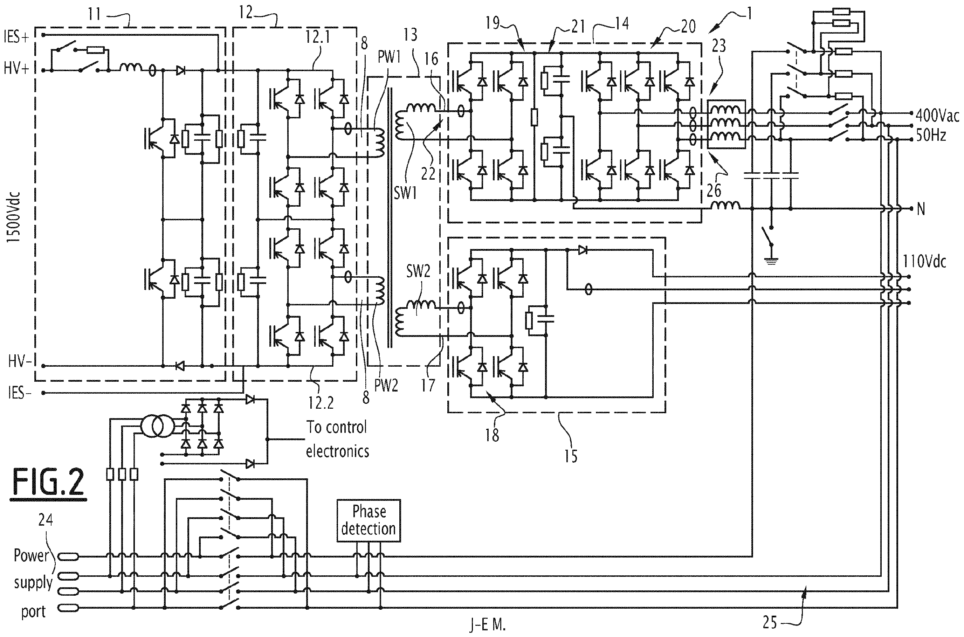

Below, an embodiment of an auxiliary converter 1 for providing power to auxiliary loads of an auxiliary electrical network of a railway vehicle pertaining to the present invention will be described using Figs. 1 and 2.

Figure 1 shows a railway vehicle 10 with an auxiliary converter 1 for providing power to auxiliary loads of an auxiliary electrical network 4 of the railway vehicle 10. The auxiliary loads include a main air compressor 2.

The railway vehicle 10 comprises a pantograph 5, a raising device, such as a pneumatic actuator 6 for raising the pantograph, the auxiliary electrical network 4, the main air compressor 2 for providing compressed air to the brakes of the railway vehicle and to the pneumatic actuator 6, a vehicle battery (rechargeable device 3) and the auxiliary converter 1. The main air compressor 2 is powered by the auxiliary electrical network 4. The auxiliary converter 1 is connected between the pantograph and the battery (rechargeable device 3) on one side and the auxiliary electrical network 4 on the other side to adequately convert electrical power from the pantograph or the battery and deliver the converted electrical power to the auxiliary electrical network 4.

As shown in Fig. 1, the auxiliary converter 1 comprises an input stage 11, a main inverter stage 12, a transformer stage 13, a high power rectifying and inverting stage 14 and a reversible battery charger stage 15. In addition, the auxiliary converter 1 is connected to the main air compressor 2 and a rechargeable device 3. The rechargeable device 3 is able to store/discharge electrical energy, and is, for example, a battery. Furthermore, the auxiliary converter 1 is connected to the pantograph 5 of the railway vehicle 10 for receiving electrical power.

The input stage 11 is connected to the pantograph 5, is adapted to receive electrical power from the pantograph, and is intended to provide a DC voltage to the main inverter stage 12.

The main inverter stage 12 includes a main inverter input 7 and a main inverter output 8, and is adapted to generate an AC voltage at its main inverter output from DC voltage received at its main inverter input from a live catenary 9. Specifically, the main inverter stage 12 is adapted to receive the DC voltage from the live catenary through the pantograph 5 and the input stage 11. Therefore, in this case, the input stage 11 acts as a step-up converter connected to the main inverter input. As shown in Fig. 2, the main inverter stage 12 comprises two single phase inverters 12-1 and 12-2.

The transformer stage 13 is connected to the main inverter output 8 and is adapted to reduce, in a catenary operating mode, the AC voltage from the main inverter stage. The transformer stage 13 has a supply output 16 for supplying the auxiliary loads via the high power rectifying and inverting stage 14 and a separate charging output 17 for supplying the rechargeable device 3 via the battery charger. In addition, the transformer stage 13 has a medium frequency transformer, in particular a transformer operating at a frequency of a few kHz (i.e. frequency between 300 kHz to 3 MHz) using a medium frequency transformer helps reducing the size and the weight of the auxiliary converter. Furthermore, the transformer stage 13 may have a single phase transformer. As shown in Figs. 1 and 2, the transformer stage 13 has a total of two primary windings pw1 and pw2 and two secondary windings sw1 and sw2.

The reversible battery charger stage 15 is connected to the charging output 17 of the transformer stage 13 and is adapted to charge, in the catenary operating mode, an electrical battery (rechargeable device 3) of the railway vehicle 10. Further, the reversible battery charger stage 15 is adapted to, in a battery operating mode, deliver a supply current from the battery (rechargeable device 3) to the transformer stage 13 for powering auxiliary loads, such as the air compressor 2.

As shown in Fig. 2, the reversible battery charger stage 15 has a single phase rectifier 18. The single phase rectifier 18 of the reversible battery charger stage 15 is adapted to act as an AC/DC converter. Therefore, the reversible battery charger stage 15 is adapted to receive an AC voltage from the transformer 13, to convert the AC voltage into the DC voltage and to provide the DC voltage (e.g. 110 Vdc) to the rechargeable device 3 for storing electrical energy. That is, in the catenary operating mode, the reversible battery charger stage 15 is able to recharge the rechargeable device 3. In addition, in case that the input stage 11 does not provide any DC power to the main inverter stage 12 (in the battery operating mode), the reversible battery charger stage 15 receives a DC voltage from the rechargeable device 3 and provides an AC voltage to the high power rectifying and inverting stage 14 through the medium frequency transformer (transformer stage 13).

The high power rectifying and inverting stage 14 is connected to the supply output 16 of the transformer 13 and is adapted to provide power to the auxiliary loads of the auxiliary electrical network 4. The high power rectifying and inverting stage 14 comprises at least one of a single phase rectifier 19, a three phase inverter 20 and a buffer capacitor 21. In this example, as shown in Fig. 2, the high power rectifying and inverting stage 14 comprises from input 22 to output 23, for example in series, a single phase rectifier 19, DC-link capacitors 21 and a three phase inverter 20. Therefore, the main inverter stage 12, the transformer stage 13 and the single phase rectifier 19 of the high power rectifying and inverting stage 14 act as a DC/DC converter stage as a whole. The inverter 20 of the high power rectifying and inverting stage 14 is adapted to receive the DC voltage from the DC/DC converter stage and to convert this DC voltage to a three phase AC voltage suitable (e.g. 400Vac/50Hz) for the air compressor 2.

The air compressor 2 is adapted to raise/lower the pantograph. In case that the pantograph 5 is down (in the battery operating mode), the reversible battery charger stage 15 receives a DC voltage from the rechargeable device 3 and delivers a supply voltage to the transformer stage 13 for raising the pantograph by using the air compressor 2.

Furthermore, as shown in Fig. 2, the auxiliary converter 1 may comprise a power supply port 24 for connection to an external power supply with a three phase power supply line 25 connected to an output 26 of the high power rectifying and inverting stage 14. The auxiliary converter 1 is adapted for charging the battery (rechargeable device 3) with power from the power supply line 25 when connected to the external power supply.

Next, the operation of the auxiliary converter 1 will be described.

In case that the pantograph 5 is raised (the catenary operating mode), the auxiliary converter 1 is able to receive the electrical power from the pantograph. Therefore, as described above, the auxiliary converter 1 is able to provide AC voltage via the high power rectifying and inverting stage 14 to the auxiliary loads such as the air compressor 2. Therefore, the air compressor 2 can generate compressed air in the usual manner. In addition, in this case, the reversible battery charger stage 15 receives an AC voltage from the transformer stage 13, converts the AC voltage into a DC voltage and provides the DC voltage to the rechargeable device 3. The rechargeable device 3 stores electrical energy.

On the other hand, in case that the pantograph is down (in the battery operating mode), the input stage 11 cannot receive electrical power from the pantograph 5, and therefore, does not provide any DC voltage to the main inverter stage 12. In this case, the reversible battery charger stage 15 receives a DC voltage from the rechargeable device 3 and provides an AC voltage to the air compressor 2 through the medium frequency transformer (the transformer stage 13) and the high power rectifying and inverting stage 14. That is, the high power rectifying and inverting stage 14 receives an AC voltage from the reversible battery charger stage 15 through the transformer 13 and converts the AC voltage into the DC voltage by using the single phase rectifier 19. Furthermore, the inverter 20 of the high power rectifying and inverting stage 14 converts the DC voltage to an AC voltage (e.g. 400Vac/50Hz) for starting the air compressor 2. The air compressor 2 is then started so that the pantograph 5 can be raised by using the AC voltage. As soon as the pantograph 5 is raised, the auxiliary converter 1 (the input stage 11) receives the electrical power from the pantograph 5 and the auxiliary converter 1 switches back to the catenary operating mode. In summary, in the case of absence of line voltage and air pressure in the main pipe, the air compressor 2 is supplied by the reversible battery charger to lift the pantograph 5.

Thanks to the high power rectifying and inverting stage 14, the auxiliary converter 1 for the railway vehicle according to the present invention is capable of limiting the impact of the main compressor starting current on the battery charger 15. Hence, the battery 3 and the battery charger stage 15 can be used to start the main compressor 2 to provide the air pressure needed for raising the pantograph 5. This reduces the costs by eliminating the need for an additional dedicated pantograph raising auxiliary compressor. In particular, as rated power of the inverter 20 of the high power rectifying and inverting stage 14 is much higher than the battery charger power, the auxiliary converter 1 for the railway vehicle according to the present invention allows to start loads (like the air compressor 2) with high transient apparent power without overdesign. On the other hand, the auxiliary converter 1 for the railway vehicle according to the present invention makes it possible to complete the startup of medium size loads, such as the air compressor 2 in a short time (without a need to start the load in ramp) . Furthermore, when a reversible battery charger is already used for emergency ventilation, it is possible to save the cost for installing additional electrical compressors.

## Claims

1. An auxiliary converter (1) adapted to provide power to auxiliary loads of an auxiliary electrical network (4) of a railway vehicle (10), the auxiliary loads including a main air compressor (2), the auxiliary converter (1) comprising:
- a main inverter stage (12) with a main inverter input (7) and a main inverter output (8), the main inverter stage (12) being configured for generating an AC voltage at its main inverter output (8) from DC voltage received at its main inverter input (7) from a live catenary;
- a transformer stage (13) connected to the main inverter output (8) and adapted to convert, in a catenary operating mode, the AC voltage from the main inverter stage (12), the transformer stage (13) having a supply output (16) for supplying a supply voltage to the auxiliary loads and a separate charging output (17) for supplying a reversible battery charger (15); and
- the reversible battery charger (15) being connected to said charging output (17) and adapted to charge, in said catenary operating mode, an electrical battery (3) of said railway vehicle (10),
wherein the reversible battery charger (15) is adapted to, in a battery operating mode, deliver a supply voltage from the battery (3) to said transformer stage (13) for powering auxiliary loads,
**characterised by** a high power rectifying and inverting stage (14) connected to said supply output (16) and adapted to provide power to said auxiliary loads of said auxiliary electrical network (4),
wherein said high power rectifying and inverting stage (14) comprises in series from input to output a single phase rectifier (19), a set of buffer capacitors (21) and a three phase inverter (20).

2. The auxiliary converter (1) of claim 1, wherein said transformer stage (13) has a medium frequency transformer.

3. The auxiliary converter (1) of claim 1 or 2, wherein said transformer stage (13) has a single phase transformer.

4. The auxiliary converter (1) of any one of the previous claims, wherein said transformer stage (13) has a total of two primary windings (pw1, pw2) and two secondary windings (sw1, sw2).

5. The auxiliary converter (1) of any one of the previous claims, wherein said reversible battery charger (15) has a single phase rectifier (18).

6. The auxiliary converter (1) of any one of the previous claims, wherein the main inverter stage (12) comprises two single phase inverters (12-1, 12-2).

7. The auxiliary converter (1) of any one of the previous claims, further comprising an input stage (11) in the form of a step-up converter connected to the main inverter input (7).

8. The auxiliary converter (1) of any one of the previous claims, further comprising a power supply port (24) for connection to an external power supply with a power supply line (25) connected to an output (26) of the high power rectifying and inverting stage (14), the auxiliary converter (1) being adapted for charging said battery (3) with power from the power supply line (25) when connected to said external power supply.

9. A railway vehicle (10) comprising:
- a pantograph (5);
- a pneumatic actuator for raising said pantograph (5);
- an auxiliary electrical network (4);
- a main air compressor (2) for providing compressed air to the brakes of the railway vehicle (10) and to the pneumatic actuator, the main air compressor (2) being powered by the auxiliary electrical network (4);
- a vehicle battery (3); and
- the auxiliary converter (1) of any one of the previous claims,
wherein said auxiliary converter (1) is connected between the pantograph (5) and the battery (3) on one side and the auxiliary electrical network on the other side to adequately convert electrical power from the pantograph (5) or the battery (3) and deliver the converted electrical power to the auxiliary electrical network (4).

## Patentansprüche

1. Hilfsbetriebeumrichter (1), der angepasst ist, um Hilfslasten eines elektrischen Hilfsnetzes (4) eines Schienenfahrzeugs (10) mit Energie zu versorgen, wobei die Hilfslasten einen Hauptluftkompressor (2) beinhalten, der Hilfsbetriebeumrichter (1) umfassend:
- eine Hauptwechselrichterstufe (12) mit einem Hauptwechselrichtereingang (7) und einem Hauptwechselrichterausgang (8), wobei die Hauptwechselrichterstufe (12) zum Erzeugen einer Wechselspannung an ihrem Hauptwechselrichterausgang (8) aus einer Gleichspannung, die an ihrem Hauptwechselrichtereingang (7) von einer stromführenden Oberleitung empfangen wird, konfiguriert ist;
- eine Transformatorstufe (13), die mit dem Hauptwechselrichterausgang (8) verbunden ist und in der Lage ist, in einer Oberleitungsbetriebsart die Wechselspannung von der Hauptwechselrichterstufe (12) umzuwandeln, wobei die Transformatorstufe (13) einen Versorgungsausgang zum Versorgen einer Versorgungsspannung an die Hilfslasten und einen separaten Ladeausgang (17) zum Versorgen eines reversiblen Batterieladegeräts (15) aufweist; und
- wobei das reversible Batterieladegerät (15) mit dem Ladeausgang verbunden ist und in der Lage ist, in der Oberleitungsbetriebsart eine elektrische Batterie (3) des Schienenfahrzeugs (10) zu laden,
wobei das reversible Batterieladegerät (15) angepasst ist, um in einem Batteriebetriebsmodus eine Versorgungsspannung von der Batterie (3) an die Transformatorstufe (13) zum Versorgen von Hilfslasten zuzuführen,
**gekennzeichnet durch** eine Hochleistungs-Gleichrichtungs- und Wechselrichterstufe (14), die mit dem Versorgungsausgang (16) verbunden ist und angepasst ist, um den Hilfslasten des elektrischen Hilfsnetzes (4) Leistung bereitzustellen,
wobei die Hochleistungs-Gleichrichtungs- und Wechselrichterstufe (14) von dem Eingang bis zu dem Ausgang in Reihe einen Einphasen-Gleichrichter (19), eine Gruppe von Pufferkondensatoren (21) und einen Dreiphasen-Wechselrichter (20) umfasst.

2. Hilfsbetriebeumrichter (1) nach Anspruch 1, wobei die Transformatorstufe (13) einen Mittelfrequenztransformator aufweist.

3. Hilfsbetriebeumrichter (1) nach Anspruch 1 oder 2, wobei die Transformatorstufe (13) einen Einphasentransformator aufweist.

4. Hilfsbetriebeumrichter (1) nach einem der vorherigen Ansprüche, wobei die Transformatorstufe (13) insgesamt zwei Primärwicklungen (pw1, pw2) und zwei Sekundärwicklungen (sw1, sw2) aufweist.

5. Hilfsbetriebeumrichter (1) nach einem der vorherigen Ansprüche, wobei das reversible Batterieladegerät (15) einen einphasigen Gleichrichter (18) aufweist.

6. Hilfsbetriebeumrichter (1) nach einem der vorherigen Ansprüche, wobei die Hauptwechselrichterstufe (12) zwei einphasige Wechselrichter (12-1, 12-2) umfasst.

7. Hilfsbetriebeumrichter (1) nach einem der vorherigen Ansprüche, ferner umfassend eine Eingangsstufe (11) in Form eines Aufwärtswandlers, der mit dem Eingang des Hauptumrichters (7) verbunden ist.

8. Hilfsbetriebeumrichter (1) nach einem der vorherigen Ansprüche, ferner umfassend einen Stromversorgungsanschluss (24) zum Anschluss an eine externe Stromversorgung mit einer Stromversorgungsleitung (25), die mit einem Ausgang (26) der Hochleistungs-Gleichrichtungs- und Wechselrichterstufe (14) verbunden ist, wobei der Hilfsbetriebeumrichter (1) zum Laden der Batterie (3) mit Strom von der Stromversorgungsleitung (25) angepasst ist, wenn er mit der externen Stromversorgung verbunden ist.

9. Schienenfahrzeug (10), umfassend:
- einen Stromabnehmer (5);
- ein pneumatisches Stellglied zum Anheben des Stromabnehmers (5);
- ein elektrisches Hilfsnetz (4);
- einen Hauptluftkompressor (2) zum Bereitstellen von Druckluft an die Bremsen des Schienenfahrzeugs (10) und den pneumatischen Aktuator, wobei der Hauptluftkompressor (2) durch das elektrische Hilfsnetz (4) gespeist wird;
- eine Fahrzeugbatterie (3); und
- den Hilfsbetriebeumrichter (1) nach einem der vorherigen Ansprüche,
wobei der Hilfsbetriebeumrichter (1) zwischen dem Stromabnehmer (5) und der Batterie (3) auf der einen Seite und dem elektrischen Hilfsnetz auf der anderen Seite verbunden ist, um die elektrische Leistung des Stromabnehmers (5) oder der Batterie (3) auf geeignete Form umzuwandeln, und
die umgewandelte elektrische Leistung in das elektrische Hilfsnetz (4) einzuspeisen.

## Revendications

1. Convertisseur auxiliaire (1) adapté pour alimenter des charges auxiliaires d'un réseau électrique auxiliaire (4) d'un véhicule ferroviaire (10), les charges auxiliaires comprenant un compresseur d'air principal (2), le convertisseur auxiliaire (1) comprenant :
- un étage onduleur principal (12) avec une entrée d'onduleur principal (7) et une sortie d'onduleur principal (8), l'étage onduleur principal (12) étant configuré pour générer une tension alternative à sa sortie d'onduleur principal (8) à partir d'une tension continue reçue à son entrée d'onduleur principal (7) à partir d'une caténaire sous tension ;
- un étage transformateur (13) connecté à la sortie d'onduleur principal (8) et adapté pour convertir, dans un mode de fonctionnement caténaire, la tension alternative provenant de l'étage onduleur principal (12), l'étage transformateur (13) ayant une sortie d'alimentation (16) pour délivrer une tension d'alimentation aux charges auxiliaires et une sortie de charge séparée (17) pour alimenter un chargeur de batterie réversible (15) ; et
- le chargeur de batterie réversible (15) étant connecté à ladite sortie de charge (17) et adapté pour charger, dans ledit mode de fonctionnement caténaire, une batterie électrique (3) dudit véhicule ferroviaire (10),
dans lequel le chargeur de batterie réversible (15) est adapté, dans un mode de fonctionnement de batterie, pour délivrer une tension d'alimentation de la batterie (3) audit étage transformateur (13) pour alimenter des charges auxiliaires, **caractérisé par** un étage de redressement et d'inversion haute puissance (14) connecté à ladite sortie d'alimentation (16) et adapté pour alimenter lesdites charges auxiliaires dudit réseau électrique auxiliaire (4),
dans lequel ledit étage de redressement et d'inversion haute puissance (14) comprend un redresseur monophasé (19), un ensemble de condensateurs tampons (21) et un onduleur triphasé (20) montés en série de l'entrée à la sortie.

2. Convertisseur auxiliaire (1) selon la revendication 1, dans lequel ledit étage transformateur (13) comporte un transformateur moyenne fréquence.

3. Convertisseur auxiliaire (1) de la revendication 1 ou 2, dans lequel ledit étage transformateur (13) comporte un transformateur monophasé.

4. Convertisseur auxiliaire (1) de l'une quelconque des revendications précédentes, dans lequel ledit étage transformateur (13) comporte un total de deux enroulements primaires (pw1, pw2) et deux enroulements secondaires (sw1, sw2).

5. Convertisseur auxiliaire (1) de l'une quelconque des revendications précédentes, dans lequel ledit chargeur de batterie réversible (15) comporte un redresseur monophasé (18).

6. Convertisseur auxiliaire (1) de l'une quelconque des revendications précédentes, dans lequel l'étage onduleur principal (12) comprend deux onduleurs monophasés (12-1, 12-2).

7. Convertisseur auxiliaire (1) de l'une quelconque des revendications précédentes, comprenant en outre un étage d'entrée (11) sous la forme d'un convertisseur élévateur connecté à l'entrée d'onduleur principal (7).

8. Convertisseur auxiliaire (1) de l'une quelconque des revendications précédentes, comprenant en outre un port d'alimentation électrique (24) permettant la connexion à une alimentation électrique externe avec une ligne d'alimentation électrique (25) connectée à une sortie (26) de l'étage de redressement et d'inversion haute puissance (14), le convertisseur auxiliaire (1) étant adapté pour charger ladite batterie (3) avec l'électricité provenant de la ligne d'alimentation électrique (25) lorsqu'il est connecté à ladite alimentation électrique externe.

9. Un véhicule ferroviaire (10) comprenant :
- un pantographe (5) ;
- un actionneur pneumatique pour relever ledit pantographe (5) ;
- un réseau électrique auxiliaire (4) ;
- un compresseur d'air principal (2) pour fournir de l'air comprimé aux freins du véhicule ferroviaire (10) et à l'actionneur pneumatique, le compresseur d'air principal (2) étant alimenté par le réseau électrique auxiliaire (4) ;
- une batterie de véhicule (3) ; et
- le convertisseur auxiliaire (1) de l'une quelconque des revendications précédentes,
dans lequel ledit convertisseur auxiliaire (1) est connecté entre le pantographe (5) et la batterie (3) d'un côté et le réseau électrique auxiliaire de l'autre côté pour convertir de manière adéquate l'énergie électrique provenant du pantographe (5) ou de la batterie (3) et délivrer l'énergie électrique convertie au réseau électrique auxiliaire (4).
